# EUROPÄISCHE PATENTSCHRIFT

(11) **EP 2 830 858 B1**
(45) Veröffentlichungstag und Bekanntmachung des Hinweises auf die Patenterteilung: **26.07.2017**
(21) Anmeldenummer: 13709873.7
(22) Anmeldetag: 12.03.2013
(51) Int. Cl.: B29C 65/10, G07C 9/00, B29C 65/50, B29K 101/12, B29L 31/30, B29L 31/34

(54) **VERFAHREN ZUM HERSTELLEN EINES ID-GEBERS FÜR KRAFTFAHRZEUGE**
METHOD FOR PRODUCING AN ID TRANSMITTER FOR MOTOR VEHICLES
PROCÉDÉ DE PRODUCTION D'UN ÉMETTEUR D'IDENTIFICATION POUR VÉHICULES

(30) Priorität: 27.03.2012 DE 102012102635
(43) Veröffentlichungstag der Anmeldung: 04.02.2015
(73) Patentinhaber: Huf Hülsbeck & Fürst GmbH & Co. KG, 42551 Velbert (DE)
(72) Erfinder: BENSIEK, Bernd, 42697 Solingen (DE)
(86) Internationale Anmeldenummer: PCT/EP2013/054978
(87) Internationale Veröffentlichungsnummer: WO 2013/143837

(56) Entgegenhaltungen:
- EP-A2- 1 837 831
- WO-A1-03/020002
- DE-A1- 10 019 163
- DE-A1-102009 035 628
- DE-U1-202011 003 610
- GB-A- 932 030
- JP-A- 2007 296 700
- US-A1- 2011 024 038

## Beschreibung

Die vorliegende Erfindung betrifft ein Verfahren zum Herstellen eines ID-Gebers für ein Kraftfahrzeug sowie die Verwendung einer speziellen Vorrichtung zum Herstellen des ID-Gebers.

ID-Geber, die auch als elektronische Schlüssel oder mobile Identifikationsgeber bezeichnet werden, werden bei Kraftfahrzeugen zur Erhöhung des Bedienkomforts und zur Diebstahlsicherung eingesetzt. ID-Geber sind üblicherweise Bestandteil von Keyless-Entry-Systemen, wobei es bei diesen Systemen ausreicht, dass ein Benutzer beim Zugriff auf ein Fahrzeug einen ID-Geber mit sich führt. Der Zugang zu dem Kraftfahrzeug wird nach einer Kommunikation zwischen Fahrzeug und ID-Geber gestattet oder verwehrt. Die Kommunikation selbst wird beispielsweise durch eine Schalteinrichtung oder Sensoreinrichtung am Türgriff oder im Bereich des Türgriffs ausgelöst. Findet sie statt, so sendet zunächst die Sendeeinrichtung im Kraftfahrzeug ein Wecksignal im Niederfrequenzbereich, z. B. 125 kHz, welches von dem ID-Geber registriert wird. Auf das Wecksignal antwortet der ID-Geber mit einer Hochfrequenz-Funkkommunikation.

Die DE202011003610U1 beschreibt eine Vorrichtung zum Herstellen eines aus zwei Teilen Kunststoffteilen bestehendes Bauteil, wobei die Bauteile mittels Heißgasschweißens verbindbar sind.

Um die Kommunikation mit dem Fahrzeug zu ermöglichen, muss also eine Elektronikbaugruppe in dem ID-Geber verbaut sein. Neben der Elektronikbaugruppe sind in dem ID-Geber weitere, u.a. für die Kommunikation notwendige Bauelemente untergebracht, und sämtliche dieser Bauelemente sind in dem Gehäuse des ID-Gebers aufgenommen. Das Gehäuse besteht üblicherweise aus mehreren Gehäuseschalenelementen, die nach Anbringung der einzelnen Baugruppen miteinander verbunden werden, wobei aufgrund der Feuchtigkeits- und Staubempfindlichkeit der Bauelemente eine möglichst dichte Zusammenfügung der einzelnen Gehäuseschalenelemente wünschenswert ist.

Bei bekannten Verfahren zum Herstellen von ID-Gebern für Kraftfahrzeuge werden die Gehäuseschalenelemente durch

Reibschweißen, Kleben oder Lasern zusammengefügt. Nachteilig bei dem Zusammenfügen durch Reibschweißen ist es beispielsweise, dass die Fügebereiche der einzelnen Gehäuseschalenelemente stets eben ausgeführt sein müssen. Bei dem Verbinden mittels Klebstoff ist die Handhabung des Klebstoffes als solches problematisch, da dieser regelmäßig Einrichtungen zum Aufbringen des Klebstoffes zusetzt. Das Verbinden durch Laserschweißen ist relativ kostenintensiv, und ferner stellen sich hohe Anforderungen hinsichtlich der Betriebssicherheit entsprechender Anlagen.

Es ist daher Aufgabe der vorliegenden Erfindung, ein alternatives Verfahren zum Herstellen von ID-Gebern für Kraftfahrzeuge bereitzustellen.

Die Aufgabe wird erfindungsgemäß durch ein Verfahren nach Patentanspruch 1 gelöst.

Bei dem erfindungsgemäßen Verfahren werden Gehäuseschalenelemente mit einem Fügebereich aus einem thermoplastischen Kunststoff bereitgestellt. Die Gehäuseschalenelemente selbst können aus einem beliebigen Material gebildet sein, lediglich die Fügebereiche müssen aus einem thermoplastischen Kunststoff bestehen. Welcher thermoplastische Kunststoff bei dem Verfahren verwendet wird, hängt primär von den Gehäuseschalenelementen und den Anforderungen an die Qualität der Fügestelle ab. Bei den Fügebereichen werden die Gehäuseschalenelemente im Laufe des Verfahrens zusammengefügt, und die Gehäuseschalenelemente ergeben dann das Gehäuse des ID-Gebers.

Üblicherweise umfassen ID-Geber für Kraftfahrzeuge zwei Gehäuseschalenelemente; das erfindungsgemäße Verfahren ist jedoch nicht auf das Herstellen eines ID-Gebers basierend auf zwei Gehäuseschalenelemente beschränkt. Die Anzahl der Gehäuseschalenelemente ist lediglich durch die eigentliche Konstruktion des ID-Gebers bestimmt.

Die Gehäuseschalenelemente werden in einer Ausgangsstellung einer Vorrichtung zum Herstellen der ID-Geber in Werkstückaufnahmen von Werkstückhalterungen angeordnet und fixiert. Im Anschluss daran werden Oberflächen der Fügebereiche der Gehäuseschalenelemente mit einem erhitzten Fluid beaufschlagt, und zwar derart, dass zumindest oberflächennahe Abschnitte der Fügebereiche plastifiziert werden. Das erhitzte Fluid wird über eine Fluidleiteinrichtung den Oberflächen der Fügebereiche zugeleitet. Bei dem erhitzten Fluid kann es sich beispielsweise einfach um erhitzte Luft handeln. Um eine Oxidation bei den zur Plastifizierung notwendigen Temperaturen zu vermeiden, ist jedoch die Verwendung eines Inertgases bevorzugt, wobei aus Kostengründen insbesondere Stickstoff Verwendung findet.

Sobald zumindest die oberflächennahen Abschnitte der Fügebereiche plastifiziert sind, werden die Gehäuseschalenelemente bei ihren Fügebereichen über die Werkstückhalter definiert zusammengeführt, so dass die plastifizierten Fügebereiche aufeinander gedrückt werden und sich eine Fügestelle bzw. Fügestellen (sofern nicht zusammenhängende Fügebereiche vorliegen) bilden.

Über eine Zeitspanne X, während der die Fügestellen, bestehend aus den zusammengeführten Fügebereichen, abkühlen, werden die Gehäuseschalenelemente weiter zusammengehalten. Dann werden die Werkstückhalter zumindest teilweise in die Ausgangsstellung zurückbewegt, so dass der ID-Geber entfernt werden kann.

Im Gegensatz zu dem Reibschweißen, bei dem die Gehäuseschalenelemente gegeneinander bewegt werden, bleiben die Gehäuseschalenelemente bei dem erfindungsgemäßen Verfahren im Bezug zueinander bei dem Fügeprozess ortsfest, so dass auch dreidimensionale Verläufe der Fügebereiche möglich sind. Mit dem erfindungsgemäßen Verfahren ist es ferner möglich, Fügebereiche im "Inneren" der Gehäuseschalenelemente, beispielsweise Innenrippen, zu bearbeiten. Außerdem ist die Homogenität des Materials bei den Fügestellen ausgesprochen hoch. Eine zusätzliche mechanische Belastung der Gehäuseschalenelemente oder der innenliegenden Bauteile findet nicht statt, und die Erwärmung der Fügebereiche findet ohne Kontakt mit einem Heizelement statt, so dass keine Materialabtragung stattfindet. Das erfindungsgemäße Verfahren zum Herstellen eines ID-Gebers vereint gegenüber den bekannten Verfahren also zahlreiche Vorteile auf sich.

Das Beaufschlagen der Oberflächen der Fügebereiche der Gehäuseschalenelemente mit einem erhitzen Fluid kann beispielsweise derart durchgeführt werden, dass die Gehäuseschalenelemente an der Fluidleiteinrichtung, welche das erhitzte Fluid an die Oberflächen der Fügebereiche leitet, vorbeigeführt werden und nach Plastifizierung der Oberflächen das Zusammenführen stattfindet. Eine derartige Verfahrensführung würde jedoch eine Art Produktionsstraße, die in der Regel relativ kostenaufwendig ist, erfordern. Bei einer bevorzugten Ausführungsform des erfindungsgemäßen Verfahrens wird daher vor dem Zusammenführen der Gehäuseschalenelemente eine die Fluidleiteinrichtung umfassende Heizeinrichtung zwischen den Gehäuseschalenelementen angeordnet und die Oberflächen der Fügebereiche über Fluidöffnungen der Fluidleiteinrichtung mit dem erhitzten Fluid beaufschlagt. Nach dem Plastifizieren der Oberflächen der Fügebereiche wird die Heizeinrichtung wieder entfernt. Wie genau die Heizeinrichtung zwischen den Gehäuseschalenelementen angeordnet wird, hängt wiederrum von der Ausgestaltung der Gehäuseschalenelemente und der Anordnung der Werkstückhalter ab. Wird beispielsweise ein ID-Geber mit einem Gehäuse basierend aus zwei Gehäuseschalenelementen hergestellt, kann die Heizeinrichtung einfach zwischen die Werkstückhalter mit den fixierten Gehäuseschalenelementen bewegt werden.

Zur Beschleunigung des Herstellungsverfahrens ist bei einer bevorzugten Ausführungsform vorgesehen, dass die Fügebereiche nach dem Zusammenführen der Gehäuseschalenelemente mit einem Kühlfluid beaufschlagt werden. Nach kurzer Zeit ist das Gehäuse soweit abgekühlt, dass es manuell handhabbar ist. Außerdem senkt dies die thermische Belastung der Elektronikbaugruppen.

Um eine möglichst große Variationsmöglichkeit hinsichtlich der Materialwahl bei den Gehäuseschalenelementen zu gewährleisten, ist es bei einer bevorzugten Ausführungsform vorgesehen, dass die Fügebereiche aus thermoplastischem Kunststoff vor dem eigentlichen Bereitstellen der Gehäuseschalenelemente an diesen angebracht oder aufgebracht werden. Auf diese Weise ist es gewährleistet, dass auch Gehäuseschalenelemente aus einem anderen Material als einem thermoplastischen Kunststoff verwendet werden können. Die Fügebereichen aus thermoplastischem Kunststoff können entweder vorgefertigt an den Gehäuseschalenelementen angebracht oder, beispielsweise durch Extrusion, auf bzw. an diese aufgebracht werden.

Zur Beschleunigung der Plastifizierung der Fügebereiche der Gehäuseschalenelemente ist es bei einer bevorzugten Ausführungsform des erfindungsgemäßen Verfahrens vorgesehen, dass wabenstrukturartige oder offenporige Fügebereiche angebracht oder aufgebracht werden. Derartig gestaltete Fügebereiche haben den Vorteil, dass diese bei der Beaufschlagung mit einem erhitzten Fluid rascher plastifizieren, da das erhitzte Fluid in die Fügebereiche selbst eindringen kann.

Um zu vermeiden, dass die beim Plastifizieren in die Fügebereiche eingebrachte Wärmeenergie in die Gehäuseschalenelemente wandert, wird bei einer bevorzugten Ausführungsform vor dem Anbringen oder Aufbringen der Fügebereiche auf die Gehäuseschalenelemente eine Isolierschicht aus einem geeigneten Material aufgebracht. Welches Material für die Isolierschicht Anwendung findet, bestimmt sich primär nach der Gestalt und dem Material der Gehäuseschalenelemente sowie dem verwendeten thermoplastischen Kunststoff. Bekannte Fluidleiteinrichtungen fassen in die Heizeinrichtung eingebrachte Fluidkanäle um, welcher den Fügebereichen der Gehäuseschalenelemente entsprechen. Bei einem Produktwechsel, bei welchem Gehäuseschalenelemente mit abweichenden Fügebereichen zur Anwendung kommen, muss jedoch auch die Fluidleiteinrichtung ausgetauscht werden. Um dies zu vermeiden, umfasst die Fluidleiteinrichtung bei einer bevorzugten Ausführungsform des erfindungsgemäßen Verfahrens eine matrixartig angeordnete Mehrzahl von Fluidleitdüsen, wobei die Fügebereiche lediglich durch die den Fügebereichen entsprechenden Fluiddüsen der matrixartig angeordneten Mehrzahl von Fluidleitdüsen mit erhitzten Fluid beaufschlagt werden. Das Fluid wird also nur durch die Fluidleitdüsen geleitet, welche der Kontur der Fügebereiche der Gehäuseschalenelemente entsprechen. Bei einem Produktwechsel können dann einfach die Fluidleitdüsen aktiviert werden, die den Fügebereichen der Gehäuseschalenelemente des neuen Produktes entsprechen.

In Abhängigkeit von der Geometrie der Gehäuseschalenelemente kann die von den Fluidleitdüsen gebildete Matrix derart ausgebildet sein, dass mehrere Gehäuseschalenelemente pro Seite der Heizeinrichtung gleichzeitig zusammengeführt werden können. Es kann auch eine Mehrzahl von Fluidleiteinrichtungen pro Heizeinrichtung vorhanden sein, oder beide Arten der Gestaltung können kombiniert werden.

Die Aufgabe wird ferner gelöst durch die Verwendung einer Vorrichtung mit zumindest zwei Werkstückhaltern und einer Heizeinrichtung mit einer Fluidleiteinrichtung zum Herstellen eines ein gegen Umwelteinflüsse schützendes Gehäuse aufweisenden ID-Gebers für Kraftfahrzeuge, wobei die Werkstückhalter und die Heizeinrichtung relativ zueinander bewegbar sind, d.h. die Heizeinrichtung entweder zwischen die Werkstückhalter oder die Werkstückhalter zu der Heizeinrichtung bewegt werden können, wobei die Fluidleiteinrichtung eine matrixartig angeordnete Mehrzahl von Fluidleitdüsen umfasst, welche derart ansteuerbar sind, dass die Fügebereiche lediglich durch die den Fügebereichen entsprechenden Fluiddüsen der matrixartig angeordneten Mehrzahl von Fluidleitdüsen mit erhitztem Fluid beaufschlagt werden.

Im Nachfolgenden wird die Erfindung unter Bezugnahme auf bevorzugte Ausführungsformen beschrieben. In der Zeichnung zeigen:
Figuren 1a - 1d verschiedene Verfahrensstadien einer Ausführungsform des erfindungsgemäßen Verfahrens, und
Figuren 2a - 2c verschiedene Formen einer bei dem erfindungsgemäßen Verfahren genutzten Heizeinrichtung.

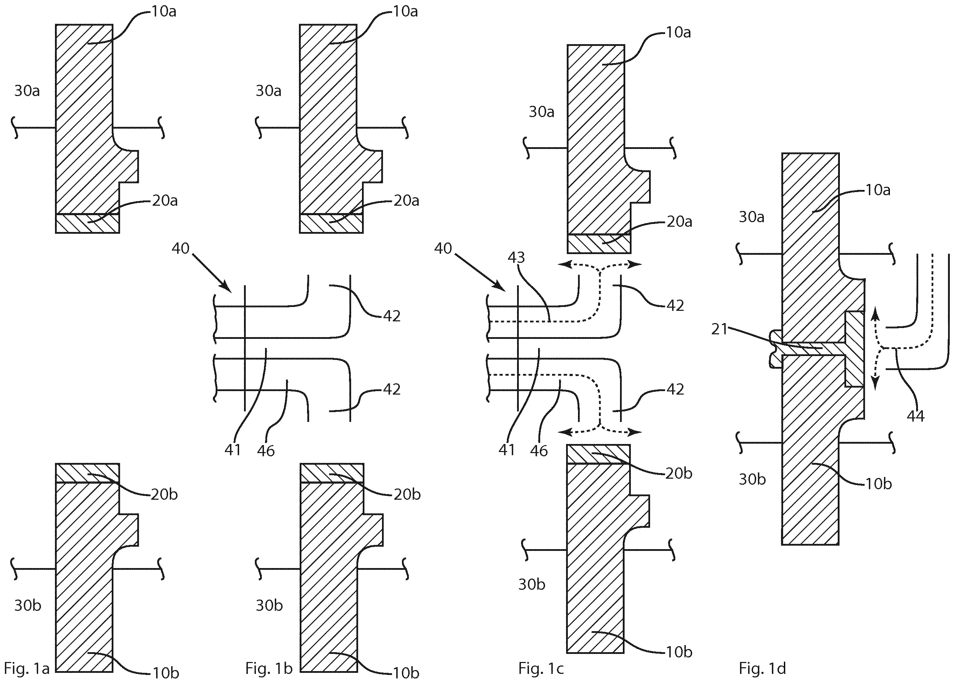

In den Figuren 1a - 1d wird eine Ausführungsform des erfindungsgemäßen Verfahrens beschrieben, wobei für das Verständnis des Ablaufs des Verfahrens unwesentliche bauliche Merkmale lediglich schematisch angedeutet sind. Es wird unter Bezugnahme auf diese Figuren eine Ausführungsform beschrieben, bei der ein ID-Geber mit einem Gehäuse basierend auf zwei Gehäuseschalenelementen hergestellt wird, wobei von den Gehäuseschalenelementen jeweils nur ein Abschnitt dargestellt ist, wobei dieser Abschnitt einen Schnitt durch die Gehäuseschalenelemente und die Fügebereiche zeigt.

In der Figur 1a sind zwei Gehäuseschalenelemente 10a, 10b (bzw. ein Abschnitt dieser) gezeigt, die in Werkstückaufnahmen 30a, 30b angeordnet und fixiert sind. Die Gehäuseschalenelemente 10a, 10b umfassen einen Fügebereich 20a, 20b aus einem thermoplastischen Kunststoff. Bei der gezeigten Ausführungsform ist durch die verschiedenartigen Schraffuren angedeutet, dass die Gehäuseschalenelemente und die Fügebereiche jeweils separate Elemente sind. Bei anderen Ausführungsformen können die Gehäuseschalenelemente und die Fügebereiche auch einstückig ausgeführt sein, was jedoch die Materialwahl hinsichtlich der Gehäuseschalenelemente auf thermoplastische Kunststoffe beschränkt. Die Gehäuseschalenelemente 10a, 10b weisen in dem Bereich benachbart zu der Fügestelle eine Nase auf, deren Funktion später beschrieben wird.

Bei dem in Figur 1b gezeigten Verfahrensstadium ist eine lediglich schematisch angedeutete Heizeinrichtung 40 zwischen den Gehäuseschalenelementen 10a, 10b angeordnet. Diese Heizeinrichtung 40 umfasst eine Fluidleiteinrichtung 41, die bei der gezeigten Ausführungsform durch eine Mehrzahl von Fluiddüsen 46 mit jeweils einer Fluidöffnung 42 ausgebildet ist.

Bei dem in der Figur 1c gezeigten Verfahrensstadium sind die Gehäuseschalenelemente 10a, 10b näher an die Heizeinrichtung 40 bewegt, so dass die Oberflächen der Fügebereiche 20a, 20b näher an den Fluidöffnungen 42 der Fluidleiteinrichtung 41 angeordnet sind. Die bei dieser Ausführungsform beschriebene Art der Verfahrensführung, nämlich die Heizeinrichtung zwischen die Gehäuseschalenelemente zu bewegen, ist lediglich eine Variante; es ist beispielsweise auch möglich, die Gehäuseschalenelemente zu der Fluidleiteinrichtung zu bewegen.

Die Oberflächen der Fügebereiche 20a, 20b werden über die Fluidöffnungen 42 der Fluideinrichtung 41 mit einem erhitzten Fluid 43 beaufschlagt, wobei es sich beispielsweise um 250°C heißen Stickstoff handeln kann, wodurch eine Oxidation des Oberflächenbereichs der erhitzten Fügebereiche 20a, 20b vermieden werden kann. Aufgrund der Wärmeeinbringung über das erhitzte Fluid werden die Fügebereiche 20a, 20b, die aus einem thermoplastischen Kunststoff bestehen, plastifiziert. Die Wahl des thermoplastischen Kunststoffes ist von dem Anwendungsbereich abhängig und für die Erfindung als solches nicht wesentlich. Die Art des thermoplastischen Kunststoffes bestimmt auch die Temperatur des erhitzten Fluides.

Sobald die Fügebereiche 20a, 20b ausreichend plastifiziert sind, werden die Gehäuseschalenelemente 10a, 10b über die Werkstückaufnahmen 30a, 30b in Richtung Ausgangsstellung bewegt, so dass die Heizeinrichtung einfach und rasch entfernt werden kann. Sobald die Heizeinrichtung 40 entfernt ist, werden die Gehäuseschalenelemente 10a, 10b bei ihren jetzt plastifizierten Fügebereichen 20a, 20b über die Werkstückhalter derart definiert zusammengeführt, dass die plastifizierten Fügebereiche aufeinander gedrückt werden und eine Fügestelle 21 ausgebildet wird. Bei dem Aufeinanderdrücken der Gehäuseschalenelemente wird Material der plastifizierten Fügebereiche 20a, 20b zu den Seiten verdrängt, wobei auf der "rechten" Seite das verdrängte Material von dem durch die Nasen gebildeten Raum aufgenommen wird und bei der "linken" Seite aus der durch die Gehäuseschalenelemente gebildeten Ebene hervorquillt. Über den durch die Nasen gebildeten Raum findet eine definierte Aufnahme des herausgedrückten thermoplastischen Kunststoffes statt, so dass diese Seite optisch ansprechend ist und eine Nachbehandlung der Fügestelle im Wesentlichen nicht erforderlich ist.

Sobald die Gehäuseschalenelemente 10a, 10b zusammengeführt sind, wird die Fügestelle 21 bei der gezeigten Ausführungsform mit einem Kühlfluid 44 beaufschlagt, um das Aushärten des thermoplastischen Kunststoffes zu beschleunigen. Sobald diese Aushärtung stattgefunden hat, werden die Werkstückhalter zumindest teilweise in die Ausgangsstellung zurückbewegt, so dass der nun fertiggestellte ID-Geber entfernt werden kann.

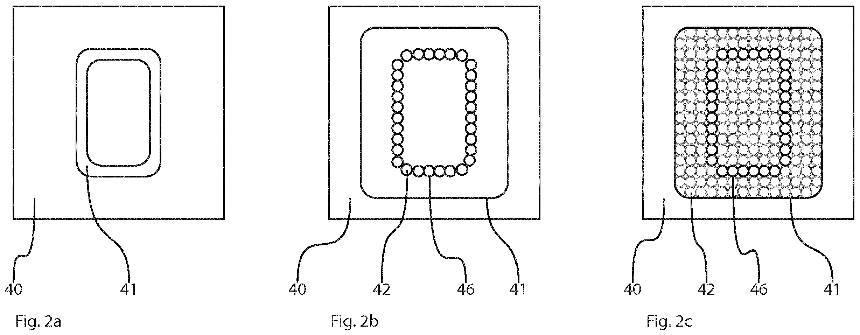

Die Figuren 2a - 2c zeigen verschiedene Ausführungsformen der Heizeinrichtung 40, wie sie bei verschiedenen Ausführungsformen des erfindungsgemäßen Verfahrens verwendet werden kann. Die gezeigten Heizeinrichtungen umfassen jeweils lediglich eine Fluidleiteinrichtung, wobei es ersichtlich ist, dass die Heizeinrichtung auch eine Mehrzahl von Fluidleiteinrichtungen aufweisen kann, wobei die Anzahl dieser Fluidleiteinrichtungen mit der Anzahl der Gehäuseschalenelemente, die über entsprechende Werkstückaufnahmen in den Werkstückhaltern angeordnet sind, abgestimmt ist. Die Fluidleiteinrichtungen können auch so aufgebaut sein, dass pro Fluidleiteinrichtung mehrere Gehäuseschalenelemente pro Heizeinrichtungsseite behandelt werden können.

Wesentlich für die genaue Ausgestaltung der Heizeinrichtung bzw. der Fluidleiteirichtungen an bzw. in der Heizeinrichtung sind die Geometrie der Gehäuseschalenelemente und deren Anzahl. Werden lediglich zwei Gehäuseschalenelemente zu einem Gehäuse zusammengefügt, können zahlreiche Gehäuseschalenelemente pro Werkstückhalter aufgenommen werden (wie in einer Art Matrix), und entsprechend viele Fluidleiteinrichtungen oder eine entsprechend ausgebildete Fluidleiteinrichtung mit einer Mehrzahl an Fluidöffnungen ist bzw. sind dann auf bzw. in der Heizeinrichtung angeordnet.

In der Heizeinrichtung findet eine Verteilung und Erhitzung des Fluides statt. Falls ein vorerhitztes Fluid genutzt wird, so wird in der Heizeinrichtung zumindest dafür Sorge getragen, dass dieses nicht unter die für die Plastifizierung des gewählten thermoplastischen Kunststoffes notwendige Temperatur abkühlt. In der Heizeinrichtung sind üblicherweise eine Anzahl von Kanälen verteilt, die für die Führung des Fluides zu der Fluidleiteinrichtung Sorge tragen, wobei die genaue Ausgestaltung der Heizeinrichtung im Hinblick auf die Fluidführung und Erhitzung im Rahmen der vorliegenden Erfindung nicht wesentlich ist.

Die in den Figuren 2a - 2c gezeigten Ausführungsformen der Heizeinrichtung sind für die Zusammenfügung eines Gehäuses bestehend aus zwei Gehäuseschalenelementen vorgesehen; die nicht dargestellte Rückseite der Heizelemente ist demgemäß entsprechend ausgebildet.

Die in Figur 2a gezeigte Heizeinrichtung 40 umfasst eine Fluidleiteinrichtung 41, wobei die Fluidöffnungen der Fluideinrichtung als einfache Schlitze ausgebildet sind, wobei ein solcher Schlitz auch auf der nicht gezeigten Rückseite der Heizeinrichtung vorhanden ist. In Abhängigkeit von der Ausführung der Heizeinrichtung können die Schlitze die Heizeinrichtung selbst vollständig durchziehen (also einen durchgehenden Schlitz bilden). Alternativ kann die Heizeinrichtung auch mehrere Fluidleiteinrichtungen oder die Fluidleiteinrichtung eine Mehrzahl von Fluidöffnungen aufweisen.

Figur 2b zeigt eine Draufsicht auf ein weiteres Ausführungsbeispiel der Heizeinrichtung, wobei die Fluidleiteinrichtung 41 bei dem gezeigten Ausführungsbeispiel eine Mehrzahl von Fluidleitdüsen 46 mit jeweils einer Fluidöffnung 42 umfasst, wobei die Fluidleitdüsen eine auf die Geometrie der Gehäuseschalenelemente abgestimmte Fluiddüsenanordnung bilden. Auch hier können mehrere Fluidleiteinrichtungen vorgesehen sein, oder eine Fluidleiteinrichtung umfasst eine Mehrzahl von durch jeweils mehrere Fluidleitdüsen gebildeten Fluiddüsenanordnungen.

Figur 2c zeigt eine weitere Ausführungsform einer Heizeinrichtung, wie sie bei dem erfindungsgemäßen Verfahren verwendet werden kann. Die Fluideinrichtung 41 umfasst eine matrixartig angeordnete Mehrzahl von Fluidleitdüsen 46 mit jeweils einer Fluidöffnung 42. Die Fluidleitdüsen 46 der Fluidleiteinrichtung 41 sind jeweils separat mit Fluid beaufschlagbar, wodurch es ermöglicht wird, nur solche Düsen mit erhitztem Fluid zu beaufschlagen, die der Geometrie der Fügebereiche der Gehäuseschalenelemente entsprechen. Eine derart ausgebildete Ausführungsform der Heizeinrichtung kann ohne einen Wechsel der Heizeinrichtung selbst bei verschiedenen Gehäuseformen eingesetzt werden; in Abhängigkeit der Gehäuseform sind lediglich andere Fluidleitdüsen mit erhitztem Fluid zu beaufschlagen. Bei der in Figur 2c gezeigten Ausführungsform sind "aktiven" Fluidleitdüsen schwarz hervorgehoben.

## Patentansprüche

1. Verfahren zum Herstellen eines ID-Gebers für ein Kraftfahrzeug, wobei der ID-Geber ein gegen Umwelteinflüsse schützendes Gehäuse aufweist, wobei Gehäuseschalenelemente (10a, 10b) mit einem Fügebereich (20a, 20b) aus einem thermoplastischen Kunststoff bereitgestellt werden,
die Gehäuseschalenelemente (10a, 10b) in einer Ausgangsstellung in Werkstückaufnahmen von Werkstückhaltern (30a, 30b) angeordnet und fixiert werden, Oberflächen der Fügebereiche (20a, 20b) der Gehäuseschalenelemente (10a, 10b) mit einem erhitzten Fluid (43) beaufschlagt werden, so dass zumindest oberflächennahe Abschnitte der Fügebereiche (20a, 20b) plastifiziert werden, wobei das erhitze Fluid (43) über eine Fluidleiteinrichtung (41) an die Oberflächen der Fügebereiche (20a, 20b) geleitet wird,
die Gehäuseschalenelemente (10a, 10b) bei ihren Fügebereichen (20a, 20b) über die Werkstückhalter (30a, 30b) definiert zusammengeführt werden, so dass die plastifizierten Fügebereiche (20a, 20b) aufeinander gedrückt werden und von den Gehäuseschalenelementen (10a, 10b) das Gehäuse des ID-Gebers gebildet wird, die Gehäuseschalenelemente (10a, 10b) für eine Zeitspanne X zusammengehalten werden, in welcher die Fügebereiche (20a, 20b) abkühlen, und
die Werkstückhalter (30a, 30b) zumindest teilweise in die Ausgangsstellung zurückbewegt werden und der ID-Geber entfernt wird, wobei die Fluidleiteinrichtung (41) eine matrixartig angeordnete Mehrzahl von Fluidleitdüsen (46) umfasst, wobei die Fügebereiche (20a, 20b) lediglich durch die den Fügebereichen (20a, 20b) entsprechenden Fluiddüsen der matrixartig angeordneten Mehrzahl von Fluidleitdüsen (46) mit erhitztem Fluid (43) beaufschlagt werden.

2. Verfahren zum Herstellen eines ID-Gebers (X) nach Anspruch 1, **dadurch gekennzeichnet, dass** vor dem Zusammenführen der Gehäuseschalenelemente (10a, 10b) eine die Fluidleiteinrichtung (41) umfassende Heizeinrichtung (40) zwischen den Gehäuseschalenelementen (10a, 10b) angeordnet wird und die Oberflächen der Fügebereiche (20a, 20b) über Fluidöffnungen (42) der Fluidleiteinrichtung (41) mit dem erhitzten Fluid (43) beaufschlagt werden, und wobei die Heizeinrichtung (40) nach dem Plastifizieren wieder entfernt wird.

3. Verfahren zum Herstellen eines ID-Gebers nach einem der Ansprüche 1 oder 2, **dadurch gekennzeichnet, dass** die Fügebereiche (20a, 20b) nach dem Zusammenführen der Gehäuseschalenelemente (10a, 10b) mit einem Kühlfluid (44) beaufschlagt werden.

4. Verfahren zum Herstellen eines ID-Gebers (X) nach einem der Ansprüche 1 - 3, **dadurch gekennzeichnet, dass** die Fügebereiche (20a, 20b) aus einem thermoplastischen Kunststoff vor dem Bereitstellen der Gehäuseschalenelemente (10a, 10b) an den Gehäuseschalenelementen (10a, 10b) angebracht oder aufgebracht werden.

5. Verfahren zum Herstellen eines ID-Gebers (X) nach Anspruch 4, **dadurch gekennzeichnet, dass** wabenstrukturartige oder offenporige Fügebereiche (20a, 20b) angebracht oder aufgebracht werden.

6. Verfahren zum Herstellen eines ID-Gebers (X) nach Anspruch 4 oder 5, **dadurch gekennzeichnet, dass** vor dem An- oder Aufbringen der Fügebereiche (20a, 20b) auf die Gehäuseschalenelemente (10a, 10b) eine Isolierschicht aufgebracht wird.

7. Verfahren zum Herstellen eines ID-Gebers (X) nach Anspruch 1, **dadurch gekennzeichnet, dass** die den Fügebereichen (20a, 20b) entsprechenden Fluiddüsen aus der von der matrixartig angeordneten Mehrzahl von Fluidleitdüsen (46) gebildeten Fläche hin zu den Fügebereichen bewegt werden.

8. Verwendung einer Vorrichtung mit zumindest zwei Werkstückhaltern (30a, 30b) und einer Heizeinrichtung (40) mit einer Fluidleiteinrichtung (41) zum Herstellen eines ein gegen Umwelteinflüsse schützendes Gehäuse aufweisenden ID-Gebers für Kraftfahrzeuge, wobei die Werkstückhalter und die Heizeinrichtung relativ zueinander bewegbar sind, wobei die Fluidleiteinrichtung (41) eine matrixartig angeordnete Mehrzahl von Fluidleitdüsen (46) umfasst, welche derart ansteuerbar sind, dass Fügebereiche (20a, 20b) von Gehäuseschalenelementen (10a, 10b) lediglich durch die den Fügebereichen (20a, 20b) entsprechenden Fluiddüsen der matrixartig angeordneten Mehrzahl von Fluidleitdüsen (46) mit erhitztem Fluid (43) beaufschlagt werden.

## Claims

1. A method for manufacturing an ID transmitter for a motor vehicle, wherein the ID transmitter has a housing for protection from environmental influences, wherein housing shell elements (10a, 10b) having a bonding area (20a, 20b) made of a thermoplastic material are provided,
the housing shell elements (10a, 10b) are arranged and fixed in an initial position in workpiece seatings of workpiece holders (30a, 30b), surfaces of the bonding areas (20a, 20b) of the housing shell elements (10a, 10b) are exposed to a heated fluid (43), so that at least near-surface portions of the bonding areas (20a, 20b) are plasticized, wherein the heated fluid (43) is passed to the surfaces of the bonding areas (20a, 20b) is passed via a fluid conducting device (41),
the housing shell elements (10a, 10b) are brought together in defined manner with their bonding areas (20a, 20b) by the workpiece holders (30a, 30b) so that the plasticized bonding areas (20a, 20b) are pressed against one another and the housing of the ID transmitter is formed from the housing shell elements (10a, 10b), the housing shell elements (10a, 10b) are held together for a time period X, during which the bonding areas (20a, 20b) cool down, and
the workpiece holders (30a, 30b) are moved back at least part of the way to the starting position and the ID transmitter is removed, wherein
the fluid conducting device (41) comprises a plurality of fluid conducting nozzles (46) arranged in the manner of a matrix, wherein the bonding areas (20a, 20b) only exposed to heated fluid (43) via those fluid nozzles of the plurality of fluid conducting nozzles (46) arranged in the manner of a matrix that correspond to the bonding areas (20a, 20b).

2. The method for manufacturing an ID transmitter (X) according to claim 1, **characterized in that** before the housing shell elements (10a, 10b) are brought together a heating device (40) that surrounds the fluid conducting device (41) is positioned between the housing shell elements (10a, 10b), and the surfaces of the bonding areas (20a, 20b) are exposed to the heated fluid (43) through fluid ports (42) in the fluid conducting means (41), and wherein the heating device (40) is removed again after the plasticizing.

3. The method for producing an ID transmitter according to either of claims 1 or 2, **characterized in that** the bonding areas (20a, 20b) are exposed to a cooling fluid (44) after the housing shell elements (10a, 10b) have been brought together.

4. The method for manufacturing an ID transmitter (X) according to any one of claims 1 - 3, **characterized in that** the bonding areas (20a, 20b) made of a thermoplastic material are applied or deposited on the housing shell elements (10a, 10b) before the housing shell elements (10a, 10b) are completed.

5. The method for manufacturing an ID transmitter (X) according to claim 4, **characterized in that** honeycomb-like or open-pore bonding areas (20a, 20b) are applied or deposited.

6. The method for manufacturing an ID transmitter (X) according to either of claims 4 or 5, **characterized in that** an insulating layer is applied before the bonding areas (20a, 20b) are applied to or deposited on the housing shell elements (10a, 10b).

7. The method for manufacturing an ID transmitter (X) according to any claim 1, **characterized in that** the fluid nozzles corresponding to the bonding areas (20a, 20b) are moved out of the area formed by the plurality of fluid conducting nozzles (46) arranged in the manner of a matrix towards the bonding areas.

8. Use of a device having at least two workpiece holders (30a, 30b) and a heating device (40) with a fluid conducting device (41) for manufacturing an ID transmitter for motor vehicles, which transmitter has a housing providing protection from environmental influences, wherein the workpiece holders and the heating device are movable relative to each other, wherein
the fluid conducting device (41) comprises a plurality of fluid conducting nozzles (46) arranged in the manner of a matrix which are controllable in such manner that the bonding areas (20a, 20b) of housing shell elements (10a, 10b) are only exposed to heated fluid (43) via those fluid nozzles of the plurality of fluid conducting nozzles (46) arranged in the manner of a matrix that correspond to the bonding areas (20a, 20b).

## Revendications

1. Procédé destiné à fabriquer un transmetteur d'identification pour un véhicule automobile, le transmetteur d'identification comportant un boîtier protégeant contre les influences environnementales, lors duquel on met à disposition des éléments de coque de boîtier (10a, 10b) avec une zone de joint (20a, 20b) en une matière thermoplastique,
lors duquel on place les éléments de coque de boîtier (10a, 10b) dans une position initiale dans des logements de pièces à usiner de porte-pièces (30a, 30b) et on les fixe, lors duquel on soumet des surfaces des zones de joint (20a, 20b) des éléments de coque de boîtier (10a, 10b) à un fluide (43) chauffé, de sorte qu'au moins des segments proches de la surface des zones de joint (20a, 20b) soient ramollis, le fluide (43) chauffé étant dirigé via un système de conduite de fluide (41) vers les surfaces des zones de joint (20a, 20b),
lors duquel on assemble de manière définie les éléments de coque de boîtier (10a, 10b) par leurs zones de joint (20a, 20b) via les porte-pièces (30a, 30b), de sorte que les zones de joint (20a, 20b) ramollies soient pressées l'une contre l'autre et que les éléments de coque de boîtier (10a, 10b) forment le boîtier du transmetteur d'identification,
lors duquel on maintient ensemble les éléments de coque de boîtier (10a, 10b) sur une période X pendant laquelle les zones de joint (20a, 20b) refroidissent et
lors duquel on re-déplace les porte-pièces (30a, 30b) au moins en partie dans la position initiale et on retire le transmetteur d'identification
le système de conduite de fluide (41) comportant une pluralité de buses conductrices de fluide (46) placées en forme de matrice, les zones de joint (20a, 20b) étant soumises à du fluide (43) chauffé uniquement par les buses à fluide correspondant aux zones de joint (20a, 20b) de la pluralité de buses conductrices de fluide (46) placées en forme de matrice.

2. Procédé destiné à fabriquer un transmetteur d'identification (X) selon la revendication 1, **caractérisé en ce qu'**avant l'assemblage des éléments de coque de boîtier (10a, 10b), on place entre les éléments de coque de boîtier (10a, 10b) un système de chauffage (40) comprenant le système de conduite de fluide (41) et via des orifices à fluide (42) du système de conduite de fluide (41), on soumet les surfaces des zones de joint (20a, 20b) au fluide (43) chauffé et lors duquel, après le ramollissement, on retire de nouveau le système de chauffage (40).

3. Procédé destiné à fabriquer un transmetteur d'identification selon l'une quelconque des revendications 1 ou 2, **caractérisé en ce qu'**après l'assemblage des éléments de coque de boîtier (10a, 10b), on soumet les zones de joint (20a, 20b) à un fluide de refroidissement (44).

4. Procédé destiné à fabriquer un transmetteur d'identification (X) selon l'une quelconque des revendications 1 à 3, **caractérisé en ce qu'**avant la mise à disposition des éléments de coque de boîtier (10a, 10b), on ajoute ou on applique les zones de joint (20a, 20b) en une matière thermoplastique sur les éléments de coque de boîtier (10a, 10b).

5. Procédé destiné à fabriquer un transmetteur d'identification (X) selon la revendication 4, **caractérisé en ce qu'**on ajoute ou on applique des zones de joint (20a, 20b) à structure alvéolaire ou à pores ouverts.

6. Procédé destiné à fabriquer un transmetteur d'identification (X) selon la revendication 4 ou 5, **caractérisé en ce qu'**avant d'ajouter ou d'appliquer les zones de joint (20a, 20b), on applique une couche isolante sur les éléments de coque de boîtier (10a, 10b).

7. Procédé destiné à fabriquer un transmetteur d'identification (X) selon la revendication 1, **caractérisé en ce qu'**on déplace les buses à fluide correspondant aux zones de joint (20a, 20b) hors de la surface formée par la pluralité de buses conductrices de fluide (46) placées en forme de matrice vers les zones de joint.

8. Utilisation d'un dispositif avec au moins deux porte-pièces (30a, 30b) et un système de chauffage (40) avec un système de conduite de fluide (41) pour fabriquer un transmetteur d'identification comportant un boîtier protégeant contre les influences environnementales, les porte-pièces et le système de chauffage étant déplaçables l'un par rapport à l'autre,
le système de conduite de fluide (41) comportant une pluralité de buses conductrices de fluide (46) placées en forme de matrice, qui sont actionnables de telle sorte que des zones de joint (20a, 20b) d'éléments de coque de boîtier (10a, 10b) soient soumises à du fluide (43) chauffé uniquement par les buses à fluide correspondant aux zones de joint (20a, 20b) de la pluralité de buses conductrices de fluide (46) placées en forme de matrice.
